# EUROPEAN PATENT SPECIFICATION

(11) **EP 1 572 785 B1**
(45) Date of publication and mention of the grant of the patent: **04.10.2006**
(21) Application number: 03779958.2
(22) Date of filing: 17.11.2003
(51) Int. Cl.: C08J 5/18, B29D 7/01

(54) **FLAT FILM FOR THERMOFORMING AND PROCESS FOR ITS MANUFACTURING**
FLACHFOLIE ZUM THERMOFORMEN UND VERFAHREN ZU IHRER HERSTELLUNG
FILM PLAT POUR THERMOFORMAGE ET PROCEDE POUR LE FABRIQUER

(30) Priority: 18.12.2002 EP 02028413
(43) Date of publication of application: 14.09.2005
(73) Proprietor: Borealis Technology Oy, 06201 Porvoo (FI)
(72) Inventor: TORGERSEN, Ulf, A-4072 Alkoven (AT); DE MINK, Paul, A-4240 Freistadt (AT); BERNREITNER, Klaus, A-4010 Linz (AT)
(74) Representative: Grünecker, Kinkeldey, Stockmair & Schwanhäusser Anwaltssozietät
(86) International application number: PCT/EP2003/012842
(87) International publication number: WO 2004/055101

(56) References cited:
- EP-A- 0 588 581
- EP-A- 0 863 183
- DE-A- 4 329 292

## Description

The present invention relates to a flat film for thermoforming with high toughness, high stiffness and high clarity. More particularly the invention relates to a flat film comprising a polyolefin composition which comprises a heterophasic copolymer, especially heterophasic propylene copolymers, with improved toughness at temperatures below room temperature, especially at temperatures below 0 °C, having improved stiffness and having improved optical properties, especially improved transparency. The present invention also relates to a process for producing the flat films.

The flat films of the invention are especially useful for thermoforming applications where high mechanical and optical requirements must be simultaneously met, especially at low temperatures, e.g. for deep freeze applications.

### Background of the invention

There are currently mainly three types of polypropylenes available for the market segment thermoforming (e.g. for food packaging): polypropylene homopolymers, polypropylene random copolymers and heterophasic propylene copolymers. Propylene homopolymers are characterised by their higher stiffness, especially when α-nucleated. The disadvantage of polypropylene homopolymers is their low impact strength, which leads to restrictions regarding the temperature range of application. Polypropylene random copolymers are characterised by good optical properties, especially high transparency, but also by low stiffness and low impact strength at low temperatures. Heterophasic propylene copolymers have a better impact strength over a wide temperature range but usually heterophasic copolymers have low transparency. Heterophasic propylene copolymers are well established in a lot of applications because of their good stiffness/impact balance together with good flowability. Heterophasic polymers are polymers having a matrix phase and a disperse phase. The matrix phase is usually a propylene homopolymer or propylene/ethylene and/or α-olefin copolymer phase and the disperse phase is usually an ethylene/α-olefin rubber copolymer. Impact strength is mainly influenced by the amount of rubber, its molecular weight and its composition. Most applications require a medium to high molecular weight of the rubber in order to achieve sufficient impact strength, especially at lower temperatures.

It is, however, well known, that propylene copolymers with a medium to high molecular weight rubber usually exhibit a non-transparent appearance, whereas materials with a low molecular weight rubber have high transparency, but low impact strength. It is not possible with present heterophasic propylene copolymers to simultaneously achieve both properties high impact strength and high transparency.

EP863183A discloses a polypropylene composition of 60-78 wt% polypropylene homopolymer and 22-40 wt% propylene/ethylene copolymer for applications like injection moulding, sheet forming, film forming and blow moulding, but not for flat films for thermoforming.

An ideal situation would be a heterophasic propylene copolymer which retains its good impact behaviour while simultaneously having the same high transparency and stiffness as an α-nucleated propylene homopolymer. This would open up the thermoforming market for deep temperature applications, which is today dominated by ABS, PVC and PET.

### Object of the Invention

It is an object of the invention to provide a flat film for thermoforming with improved impact strength at ambient and low temperatures having improved stiffness and having improved optical properties, especially good transparency.

It is a further object of the invention to provide a process for producing an aforementioned flat film for thermoforming.

### Detailed description of the invention

The object of the invention has been achieved by providing a flat film comprising a polyolefin composition, which polyolefin composition comprises a heterophasic propylene copolymer and an α-nucleating agent, where the intrinsic viscosity of the disperse phase of the heterophasic copolymer does not exceed a certain limit.

The present invention therefore relates to a flat film for thermoforming with high toughness, high stiffness and high transparency, comprising a polyolefin composition, which polyolefin composition comprises
A) a heterophasic propylene copolymer containing
   a) 83 - 90 wt% of a matrix phase comprising a propylene homopolymer or a propylene copolymer with up to 5 mol% of ethylene and/or at least one C₄-C₈ α-olefin and
   b) 10 - 17 wt% of a disperse phase comprising an ethylene rubber copolymer with from 20 - 80 mol% ethylene and from 80 - 20 mol% of at least one C₃-C₈ α-olefin and
   where the intrinsic viscosity of the XCS-fraction of the heterophasic copolymer is ≤ 2 dl/g and
B) an α-nucleating agent,
the film having a thickness of from 100 to 2000 µm
and where the process for producing the flat film comprises at least one polishing step.

Surprisingly, a flat film from a polyolefin composition as above combines the good optical appearance, i.e. transparency, of a heterophasic copolymer having a low molecular weight rubber (IV of XCS ≤ 2 dl/g) with the stiffness of a propylene homopolymer and with the good impact strength, especially at low temperatures of a heterophasic copolymer with high molecular weight rubber without neither comprising a propylene homopolymer nor a high molecular weight rubber.

The transparency is achieved by having a low molecular weight rubber with an intrinsic viscosity of the XCS-content of ≤ 2 dl/g. This results in small rubber particle diameters of about 0.1 - 0.5 µm, which is for a good part below the wavelength of visible light (380-780 nm) and which does therefore not give rise to diffraction and haze.

Usually, a disadvantage with a low molecular weight rubber is a correspondingly low impact strength. Surprisingly, the polyolefin compositions containing an α-nucleating agent which are used for producing the flat films are characterised by remarkably increased impact strength at room temperature compared to the corresponding non-nucleated polyolefin compositions. Simultaneously, the desired effect of α-nucleation, an increase in stiffness and transparency, is also achieved.

While α-nucleation did not result in an increase in the impact strength at -20 °C of the polyolefin compositions, it was surprisingly observed, that flat films produced from these polyolefin compositions, which flat films are obtained by a process which involves at least one polishing step, e.g. by using a "polishing stack" or "roll stack" (German expression is "Glättwerk"), also show a remarkably increased toughness (observed as penetration energy) at -20 °C, which is then comparable to conventional flat films from heterophasic propylene copolymers produced by the same technology.

For the ethylene rubber copolymer the ethylene content may range from 20-80 mol% preferably from 30-70 mol%, more preferably from 30-50 mol%. Accordingly, the C₃-C₈ α-olefin content may range from 80-20 mol%, preferably from 70-30 mol%, more preferably from 70-50 mol%.

The flat films of the present invention have a thickness of from 100 to 2000 µm, preferably from 250 to 500 µm and most preferably of about 300 µm.

Films with a thickness of about 100 to about 2000 µm are used for thermoforming. Films with a thickness below 100 µm are too thin for most thermoforming applications, films with a thickness above 2000 µm do not show the desired effect, i.e. improved impact strength/stiffness/optical properties balance. Films with a thickness of about 250 to about 500 µm are most widely used for thermoforming and therefore offer the greatest commercial value for films according to the present invention. Films with a thickness of about 300 µm have the most pronounced transparency/stiffness/toughness balance and are therefore most preferred from this technical point of view.

According to a preferred embodiment the ethylene rubber copolymer is an ethylene propylene rubber (EPR).

EPR's are more cost-effective than ethylene rubbers with higher α-olefins and they can either be synthesised in the second step of a two-step process, where the first step synthesises the matrix polymer or they can be mixed with the matrix polymer in a separate melt blending step.

In order to retain the good flowability of the polyolefin composition of the present invention it is preferred for it to have an MFR of 0.5 - 8.0 g/10 min, preferably 2.0 - 4.0 g/10 min.

It has been found, that for a good dispersion of the disperse phase in the matrix phase it is preferred for the intrinsic viscosity of the disperse phase to be smaller or about equal to the intrinsic viscosity of the matrix phase. Accordingly, it is preferred for the MFR of the matrix phase of the heterophasic copolymer to be from 0.5 to 1.2 times the overall MFR of the heterophasic copolymer. Higher values of the MFR of the matrix phase than the MFR of the-heterophasic copolymer should occur only at the upper end of the overall MFR-range, i.e. at an MFR of the heterophasic copolymer of from about 4.5 to 8.0 g/10 min).

These conditions will make sure that dispersion of the rubber in the matrix phase and thus the transparency of the flat film are optimised.

Most preferred in this regard is, that the MFR of the overall heterophasic copolymer is about equal to that of the MFR of the matrix phase.

It is preferred that the intrinsic viscosity of the XCS-fraction of the heterophasic copolymer is from 0.9 - -1.8 dl/g.

Ethylene rubber copolymers with such low intrinsic viscosity are necessary for the polyolefin composition to have sufficient gloss, i.e. above 60 %, which in turn is also a requirement for good transparency, with haze-levels below 40 %.

The polyolefin compositions used for the flat films of the present invention comprise an α-nucleating agent. A wide range of nucleating agents is suitable for accomplishing the desired degree of α-nucleation.

Of the various α-nucleating agents, those represented by the following formulae and those explicitly mentioned are considered particularly suitable. 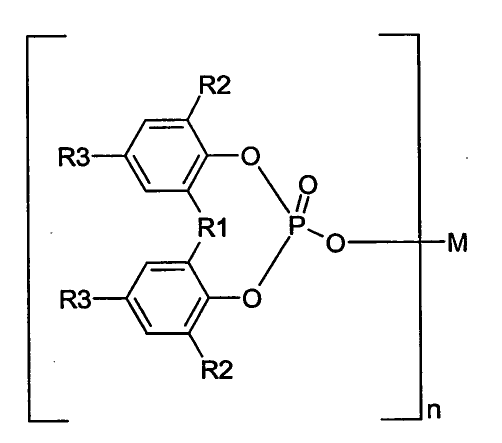 wherein R1 is oxygen, sulphur or a hydrocarbon group of 1 to 10 carbon atoms; each of R2 and R3 is hydrogen or a hydrocarbon group of 1 to 10 carbon atoms; R2 and R3 may be the same or different from each other; two of R2, two of R3, or R2 and R3 may be bonded together to form a ring, M is a monovalent to trivalent metal atom; and n is an integer from 1 to 3.

Specific examples of the α-nucleating agents represented by the above formula include sodium-2,2'-methylene-bis(4,6-di-t-butylphenyl)phosphate, sodium-2,2'-ethylidene-bis(4,6-di-t-butylphenyl)phosphate, lithium-2,2'-methylene-bis(4,6-di-t-butylphenyl)phosphate, lithium-2,2'-ethylidene-bis(4,6-di-t-butylphenyl)phosphate, sodium-2,2'-ethylidene-bis(4-i-propyl-6-t-butylphenyl)phosphate, lithium-2,2'-methylene-bis(4-methyl-6-t-butylphenyl)phosphate, lithium-2,2'-methylene-bis(4-ethyl-6-t-butylphenyl)phosphate, calcium-bis[2,2'-thiobis(4-methyl-6-t-butylphenyl)phosphate], calcium-bis[2,2'-thiobis(4-ethyl-6-t-butyiphenyl)phosphate], calcium-bis[2,2'-thiobis-(4,6-di-t-butylphenyl)phosphate], magnesium-bis[2,2'-thiobis-(4,6-di-t-butylphenyl)phosphate], magnesium-bis[2,2'-thiobis-(4-t-octylphenyl)phosphate], sodium-2,2'-butylidene-bis(4,6-dimethylphenyl)phosphate, sodium-2,2'-butylidene-bis(4,6-di-t-butylphenyl)phosphate, sodium-2,2'-t-octylmethylene-bis(4,6-dimethylphenyl)phosphate, sodium-2,2'-t-octylmethylene-bis(4,6-di-t-butylphenyl)phosphate, calcium-bis[2,2'-methylene-bis(4,6-di-t-butylphenyl)phosphate], magnesium-bis[2,2'-methylene-bis(4,6-di-t-butylphenyl)phosphate],- barium-bis[2,2'-methylene-bis(4,6-di-t-butylphenyl)phosphate], sodium-2,2'-methylene-bis(4-methyl-6-t-butylphenyl)phosphate, sodium-2,2'-methylene-bis(4-ethyl-6-t-butylphenyl)phosphate, sodium(4,4'-dimethyl-5,6'-di-t-butyl-2,2'-biphenyl)phosphate, calcium-bis[(4,4'-dimethyl-6,6'-di-t-butyl-2,2'-biphenyl)phosphate], sodium-2,2'-ethylidene-bis(4-m-butyl-6-t-butylphenyl)phosphate, sodium-2,2'-methylene-bis(4,6-dimethylphenyl)phosphate, sodium-2,2'-methylene-bis(4,6-diethylphenyl)phosphate, potassium-2,2'-ethylidene-bis(4,6-di-t-butylphenyl)phosphate, calcium-bis[2,2'-ethylidene-bis(4,6-di-t-butylphenyl)phosphate], magnesium-bis[2,2'-ethylidene-bis(4,6-di-t-butylphenyl)phosphate], barium-bis[2,2'-ethylidene-bis(4,6-di-t-butylphenyl)phosphate], aluminium-tris[2,2'-methylene-bis(4,6-di-t-butylphenyl)phosphate] and aluminium-tris[2,2'-ethylidene-bis(4,6-di-t-butylphenyl)phosphate].

Of these, sodium-2,2'-methylene-bis(4,6-di-t-butylphenyl)phosphate is preferred. 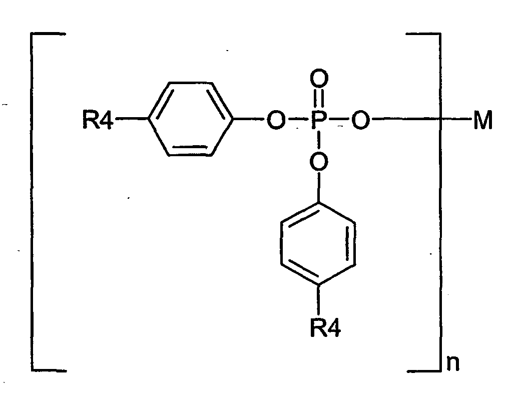 wherein R4 is hydrogen or a hydrocarbon group of 1 to 10 carbon atoms; M is a monovalent to trivalent metal atom; and n is an integer of 1 to 3.

Specific examples of the α-nucleating agents represented by the above formula include sodium-bis(4-t-butylphenyl)phosphate, sodium-bis(4-methylphenyl)phosphate, sodium-bis(4-ethylphenyl)phosphate, sodium-bis(4-i-propylphenyl) phosphate, sodium-bis(4-t-octylphenyl)phosphate, potassium-bis(4-t-butylphenyl)phosphate, calcium-bis(4-t-butylpheyl) phosphate, magnesium-bis(4-t-butylpheyl)phosphate, lithium-bis(4-t-butylphenyl)phosphate and aluminium-bis(4-t-butylpheyl)phosphate.

Of these, sodium-bis(4-t-butylphenyl)phosphate is preferred. 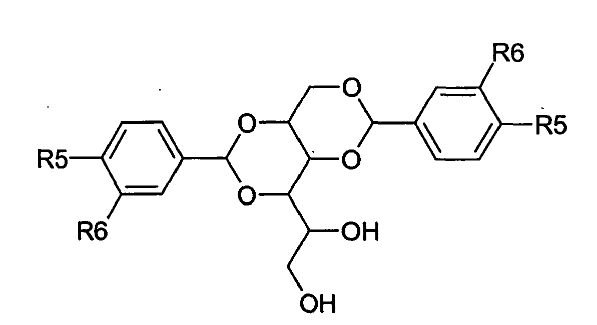 wherein each of R5 and R6 is hydrogen or a hydrocarbon group of 1 to 10 carbon atoms; R5 and R6 may be the same or different from each other.

Specific examples of the nucleating agents represented by the above formula include 1,3,2,4-dibenzylidenesorbitol, 1,3-benzylidene-2,4-p-methylbenzylidenesorbitol, 1,3-benzylidene-2,4-p-ethylbenzylidenesorbitol, 1,3-p-methylbenzylidene-2,4-benzylidenesorbitol, 1,3-p-ethylbenzylidene-2,4-benzylidenesorbitol, 1,3-p-methylbenzylidene-2,4-p-ethylbenzylidenesorbitol, 1,3-p-ethylbenzylidene-2,4-p-methylbenzylidenesorbitol, 1,3,2,4-di(p-methylbenzylidene)sorbitol, 1,3,2,4-di(p-ethylbenzylidene)sorbitol, 1,3,2,4-di(p-n-propylbenzylidene)sorbitol, 1,3,2,4-di(p-i-propylbenzylidene)sorbitol, 1,3,2,4-di(p-n-butylbenzylidene)sorbitol, 1,3,2,4-di(p-s-butylbenzylidene)sorbitol, 1,3,2,4-di(p-t-butylbenzylidene)sorbitol, 1,3,2,4-di(2',4'-dimethylbenzylidene)sorbitol, 1,3,2,4-di(3',4'-dimethylbenzylidene)sorbitol, 1,3,2,4-di(p-methoxybenzylidene)sorbitol, 1,3,2,4-di(p-ethoxybenzylidene)sorbitol, 1,3-benzylidene-2,4-p-chlorobenzylidenesorbitol, 1,3-p-chlorobenzylidene-2,4-benzylidenesorbitol, 1,3-p-chlorobenzylidene-2,4-p-methylbenzylidenesorbitol, 1,3-p-chlorobenzylidene-2,4-p-ethylbenzylidenesorbitol, 1,3-p-methylbenzylidene-2,4-p-chlorobenzylidenesorbitol, 1,3-p-ethylbenzylidene-2,4-p-chlorobenzylidenesorbitol and 1,3,2,4-di(p-chlorobenzylidene)sorbitol.

Of these, 1,3,2,4-dibenzylidenesorbitol, 1,3,2,4-di(p-methylbenzylidene)sorbitol, 1,3,2,4-di(p-ethylbenzylidene)sorbitol, 1,3-p-chlorobenzylidene-2,4-p-methylbenzylidenesorbitol, 1,3,2,4-di(p-chlorobenzylidene)sorbitol and 1,3,2,4-di(3',4'-dimethylbenzylidene)sorbitol are preferred.

Also employable are other nucleating agents such as metallic salts of aromatic carboxylic acids and metallic salts of aliphatic carboxylic acids. Specific examples thereof include aluminium benzoate, sodium benzoate, aluminium p-t-butylbenzoate, sodium adipate, sodium thiophenecarboxylate and sodium pyrrolecarboxylate, with sodium benzoate being preferred.

A still further α-nucleating agent, which is also among those which are particularly preferred and which has not been mentioned above, is commercially available from Asahi Denka Kogyo (Japan) under the name "ADK STAB NA21E".

A further nucleation method, herein referred to as "CCPP", is a special reactor technique, where the catalyst is prepolymerised with monomers like vinylcyclohexane (VCH). This method is described in greater detail in e.g. EP 0 316 187 A2. For the purpose of this invention "CCPP" is referred to as an α-nucleating agent.

Inorganic compounds such as talc may be also used.

Of the above-mentioned α-nucleating agents any one or mixtures of sodium benzoate, 1,3 : 2,4 bis(3,4-dimethyl-benzylidene) sorbitol, sodium 2,2'-methylene bis-(4,6-di-tert. butylphenyl) phosphate, ADK STAB NA21 E and CCPP are particularly preferred.

in the propylene copolymer of the invention, the α-nucleating agent is used in an amount of 0.001 to 10 wt%, preferably 0.01 to 5 wt%, more preferably 0.01 to 1 wt%.

A further object of the invention is a process for producing the flat films of the invention.

This object is achieved by extruding a polyolefin composition, which polyolefin composition comprises
A) a heterophasic propylene copolymer containing
   a) 83 - 90 wt% of a matrix phase comprising a propylene homopolymer or a propylene copolymer with up to 5 mol% of ethylene and/or at least one C₄-Cₐ α-olefin and
   b) 10 - 17 wt% of a disperse phase comprising an ethylene rubber copolymer with from 20 - 80 mol% ethylene and from 80 - 20 mol% of at least one C₃-C₈ α-olefin and
   where the intrinsic viscosity of the XCS-fraction of the heterophasic copolymer is ≤ 2 dl/g and
B) an α-nucleating agent
through a flat die and processing the extrudate on a polishing stack into a flat film having a thickness of from 100 to 2000 µm.

The polyolefin composition used for the present invention is preferably produced by melt mixing the heterophasic propylene copolymer base resin with 0.0001 to 2.0 wt% based on the propylene copolymer used, of α-nucleating agent(s), optionally adding conventional additives and/or stabilisers and/or fillers, at temperatures from 175 to 250 °C and cooling and crystallising the melt according to procedures which are state of the art.

It is further possible, that the α-nucleating agent is already added to the heterophasic propylene copolymer during its synthesis inside the reactor.

The heterophasic propylene copolymer may be produced by multistage process polymerisation of propylene or propylene and ethylene and/or an α-olefin such as bulk polymerisation, gas phase polymerisation, slurry polymerisation, solution polymerisation or combinations thereof using conventional catalysts. Those processes are well known to one skilled in the art.

A preferred process is a combination of a bulk slurry loop reactor(s) and gas phase reactor(s). The matrix polymer can be made either in loop reactors or in a combination of loop and gas phase reactor.

The polymer produced in this way is transferred into another reactor and the disperse phase, which in this case is a propylene/α-olefin rubber, is polymerised. Preferably this polymerisation step is done in a gas phase polymerisation.

A suitable catalyst for the polymerisation of the heterophasic copolymer is any stereospecific catalyst for propylene polymerisation which is capable of polymerising and copolymerising propylene and comonomers at a temperature of 40 to 110 °C and at a pressure form 10 to 100 bar. Ziegler Natta catalysts as well as metallocene catalysts are suitable catalysts.

One skilled in the art is aware of the various possibilities to produce such heterophasic systems and will simply find out a suitable procedure to produce suitable heterophasic polymer systems which are used in the present invention.

The heterophasic propylene copolymer may also be produced by mixing and melt blending a propylene homopolymer with an ethylene rubber copolymer.

The films of the present invention are preferably converted to endproducts by a thermoforming process. Preferred endproducts are used in the packaging industry e.g. for deep freeze applications and preferably are in the shape of cups, trays, lids etc.

### Technologies for producing films for thermoforming

### Cast film technology

In this most simple technology for producing polymer films, the molten polymer is extruded through a slot die fed by a (normally single-screw) extruder onto a first cooled roll, the so-called chill-roll. From this roll, the already solidified film is taken up by a second roll (nip roll or takeup roll) and transported to a winding device after trimming the edges. Only a very limited amount of orientation is created in the film, which is determined by the ratio between die thickness and film thickness or the extrusion speed and the take-up speed, respectively. Due to its technical simplicity, cast film technology is a very economical and easy-to-handle process. The films resulting from this technology usually have a thickness of from 20 to 250 µm and are characterised by good transparency and rather isotropic mechanical properties (limited stiffness, high toughness).

Disadvantage of the cast film technology for polypropylene films: The higher the film thickness the more uneven is the cooling rate over the cross section. This results in a nonuniform surface structure and crystallisation structure and in low clarity and unfavourable thermoforming behaviour.

**Waterbath or steel-belt technology**: These processes are targeted at reaching very high cooling rates in the film forming process, thus reducing the film crystallinity and stiffness while optimising thermoforming properties and transparency. The molten film from a flat die is quenched immediately between polished steel belts cooled from the backside or in a cold water bath, from which it is taken to the winding device. Films produced this way have the lowest possible crystallinity and stiffness.

### Roll stack technology

The production of extruded sheet for thermoforming is normally performed using a three roll rollstack, where the thickness range is typically from around 0.3 mm up to about 2 mm. The rollstack comprises three rotating, hardened and highly polished rolls (typical diameters 300 - 600 mm), preferably with independent temperature control and drives. The purpose of the rollstack is to convert a polymer melt exiting a flat die into a solid polished sheet, with uniform and controlled morphology, which can subsequently be handled. The rollstack is most commonly in a vertical configuration, although other configurations are also used, and the sheet can pass either down or up the rollstack. The current description is for vertical downstack operation.

In the case of polypropylene, the molten polymer (typically at 210-240 °C) passes directly from the die into the gap between the rotating top and middle rolls, where the gap is similar (±10 %) to the die opening. The extruder output is adjusted such that a small and constant rolling bank of material is established between one of the rolls (preferably the upper roll) and one of the surfaces of the polymer melt. The extruder output and roll speed are adjusted to minimise any stretching and machine direction orientation of the polymer melt. The polymer passes over the middle roll into the gap between the middle and bottom rolls. The temperature of the middle roll is adjusted such that the polymer remains in good contact with the roll and the upper (outer) surface of the sheet is at an appropriate temperature for the pressure between the middle and bottom rolls to provide a highly polished surface. Further cooling takes place on the bottom roll and the sheet exits the rollstack for subsequent operations - normally winding or direct in-line thermoforming.

The roll temperatures are particularly critical factors for obtaining good quality polypropylene sheet for thermoforming. The optimum temperatures depend on several factors, which include the roll diameters, line speed, sheet thickness and the type of polypropylene being processed. Depending on these factors the temperatures of the rolls typically fall into the ranges:

| | |
|---|---|
| Top Roll | 20 - 50 °C |
| Middle Roll | 20 - 80 °C |
| Bottom Roll | 30 - 90 °C |

The top roll temperature is normally less than that of the middle roll and the middle and bottom rolls normally have a similar temperature. Orientation and anisotropy of the mechanical properties of flat films produced by roll stack technology are low.

### Description of measurement methods

### XCS

Xylene cold solubles were determined at 23 °C according ISO 6427. Xylene solubles are defined as the percent by weight that stays in solution after the polymer sample is dissolved in hot xylene and the solution is allowed to cool to 23 °C. XCS largely corresponds to the rubber content of the heterophasic copolymer.

### MFR

The melt flow rates were measured with a load of 2.16 kg at 230°C. The melt flow rate is that quantity of polymer in grams which the test apparatus standardised to ISO 1133 extrudes within 10 minutes at a temperature of 230 °C under a load of 2.16 kg.

### Flexural Modulus

The flexural test was carried out according to the method of ISO 178 by using injection moulded test specimens as described in EN ISO 1873-2 (80 x 10 x 4 mm).

### Charpy notched impact strength

The Charpy notched impact strength was determined according to ISO 179 / 1eA at 23 °C and at -20 °C by using injection moulded test specimens as described in EN ISO 1873-2 (80 x 10 x 4 mm).

### Intrinsic Viscosity

Intrinsic Viscosity was measured according to DIN ISO 1628-1 (October 1999) in Decalin at 135 °C.

### Gloss

Gloss was determined according to DIN 67530 on injection moulded test plaques (60 x 60 x 2 mm) and on roll stack sheets (thickness 300 µm) at an angle of 20°.

### Haze

Haze was determined according to ASTM D 1003-92 on injection moulded test plaques (60 x 60 x 2 mm) and on roll stack films (thickness 300 µm).

### Tensile Modulus

Tensile Modulus was determined according to DIN 53 455/57 on roll stack films (thickness 300 µm).

### Dart Drop Test

Damaging Force (F_{SD}), Penetration Energy (W_{SD}) and total Penetration Energy (W_{ges}) were determined with a Dart Drop Test according to DIN 553 443 part 2.

### Clarity, Transparency

Clarity and Transparency were determined according to ASTM D 1003-92 on injection moulded test plaques (60 x 60 x 2 mm)

### Examples

### Heterophasic polymers:

The heterophasic polymers were produced in a two step process. In the first step a propylene homopolymer (matrix phase) was polymerised in liquid propylene and in the second stage a propylene/ethylene rubber (disperse phase) was polymerised in a gas phase reactor. As catalyst a Ziegler-Natta catalyst system was used.

The characteristics of the heterophasic polymers are given in table 1.

**Table 1**

| **polymer** | **polymer split** | | **MFR1** | **XCS1** | **MFR2** | **XCS2** | **C2 total** | **C3/XCS2** | **IV/XCS2** |
|---|---|---|---|---|---|---|---|---|---|
| | **matrix** [wt%] | **disperse** [wt%] | [g/10] | [wt%] | [g/10'] | [wt%] | [mol%] | [wt%] | [dl/g] |
| polymer 1 | 79.5 | 21.5 | 6.3 | 3.7 | 3.6 | 21.4 | 19.5 | 51 | 2.4 |
| polymer 2 | 89 | 11 | 2.5 | 2.4 | 3 | 13 | 11.2 | 55.5 | 1.4 |
| polymer 3 | 83 | 17 | 2.6 | 2.4 | 3.1 | 16.4 | 12.3 | 55 | 1.3 |
| polymer 4 | 87 | 13 | 0.3 | | 0.35 | 14.5 | 12 | | 2.0 |
| polymer 5 | 89 | 11 | 5.0 | 1.5 | 3.5 | 12 | 8.5 | | 2.8 |

| | | | | | | | | | |
|---|---|---|---|---|---|---|---|---|---|
| MFR1: Melt Flow Rate of the matrix phase of the heterophasic copolymer XCS1: xylene cold soluble fraction of matrix phase of the heterophasic copolymer MFR2: Melt Flow Rate of the heterophasic copolymer XCS2: xylene cold soluble fraction of the heterophasic copolymer C2 total: total ethylene content of the heterophasic copolymer C3/XCS2: propylene content of the xylene cold soluble fraction of the heterophasic copolymer IV/XCS2: Intrinsic viscosity of the xylene cold soluble fraction of the heterophasic copolymer | | | | | | | | | |

Polymers 1 - 5 of table 1 were mixed with conventional additives (0.1 % lrgafos 168, 0.1 % Irganox 1010, 0.1 % Ca-stearate, 0.3 % Glycerol monostearate) and the respective amounts of α-nucleating agent in an intensive mixer (Henschel mixer) for 20 seconds.

The compositions were compounded in a twin screw extruder at a temperature of 250 °C. The strands were quenched in cold water and pelletised.

Injection moulded test bars were produced and the Charpy notched impact strength according to ISO 179 and the flexural modulus according to ISO 178 were measured.

For determining optical properties, i.e. gloss, haze and clarity, injection moulded plaques (60 x 60 x 2 mm) were produced. Optical properties were determined according to the methods specified in section "Description of measurement methods".

The results are shown in table 2.

**Table 2**

| **example** | **polymer** | **-nucl. agent** | | **MFR [g/10min]** | **NIS 23 °C [kJ/m**^{**2**}**]** | **NIS -20 °C [kJ/m**^{**2**}**]** | **Flex.Mod. [MPa]** | **Gloss [%]** | **Haze [%]** | **Transp. [%]** | **Clarity [%]** |
|---|---|---|---|---|---|---|---|---|---|---|---|
| | | **amount [wt%]** | **agent** | | | | | | | | |
| CE1 | 1 | - | - | 3,6 | 9,7 | 4,08 | 1014 | n.d. | n.d. | n.d. | n.d. |
| CE2 | 1 | 0,05 | NA21 | 3,6 | 9,7 | 5,29 | 1272 | 38,4 | 98,7 | 62,5 | 3,8 |
| E1 | 2 | - | - | 3,0 | 7,9 | 1,74 | 1357 | 60,0 | n.d. | n.d. | n.d. |
| E2 | 2 | 0,05 | NA21 | 3,0 | 27,0 | 1,59 | 1393 | 88,2 | 58,8 | 72,0 | 98,6 |
| E3 | 2 | 0,10 | NA21 | 3,0 | 16,1 | 1,55 | 1481 | 91,7 | 53,3 | 75,8 | 98,8 |
| E4 | 3 | - | - | 3,1 | 11,7 | 1,86 | 1173 | 60,0 | n.d. | n.d. | n.d. |
| E5 | 3 | 0,05 | NA21 | 3,1 | 54,0 | 1,93 | 1184 | 84,6 | 62,8 | 67,4 | 98,5 |
| E6 | 3 | 0,10 | NA21 | 3,1 | 37,7 | 1,86 | 1268 | 86,0 | 59,1 | 70,1 | 98,8 |
| E7 | 4 | - | - | 5,0 | 8,9 | 2,3 | 1013 | | | | |
| CE3 | 5 | - | CCPP | 3,5 | 11,0 | 5,0 | 1492 | | | | |

| | | | | | | | | | | | |
|---|---|---|---|---|---|---|---|---|---|---|---|
| E: Example CE: Comparative Example MFR: MFR of the composition NA-21: ADK STAB NA-21 E from Asahi Denka Kogyo NIS 23 °C: Charpy notched impact strength acc. to ISO 179 eA at 23 °C NIS -20 °C: Charpy notched impact strength acc. to ISO 179 eA at -20 °C Flex.Mod.: Flexural Modulus acc. to ISO 178 | | | | | | | | | | | |

The difference in MFR of polymer 4 of table 1 and example E7 of table 2 is due to the fact that peroxide was added in order to visbreak polymer 4 to the desired final MFR of 5 g/10 min.

Compositions containing α-nucleating agents of table 2 were processed into flat films (thickness 300 µm) of the present invention on a standard PP extrusion line with a flat film extrusion die followed by a horizontally constructed roll stack equipment and wind-up unit.

| | | |
|---|---|---|
| Extruder: | three-section screw; diameter 60 mm; 30 D; shear and mixing unit; | |
| | | |
| Die: | flat film extrusion die; width 800 mm | |
| | | |
| Roll stack: | 3 rolls; horizontally constructed | |
| | Polishing roll: diameter 300 mm | |
| | Cooling roll 1: diameter 450 mm | |
| | Cooling roll 2: diameter 300 mm | |
| | | |
| Settings: | | |
| | | |
| Extrusion: | Barrel section 1: | 220 °C |
| | Barrel section 2: | 230 °C |
| | Barrel section 3: | 250 °C |
| | Barrel section 4: | 250 °C |
| | Screen: | 250 °C |
| | Adapter: | 230 °C |
| | | |
| Die: | Section 1: | 210°C |
| | Section 2: | 210°C |
| | Section 3: | 210 °C |
| | Section 4: | 210 °C |
| | Section 5: | 210 °C |
| | | |
| Roll stack: | polishing roll: | 26 °C |
| | Cooling roll 1: | 25 °C |
| | Cooling roll 2: | 40 °C |
| | | |
| Film thickness: | | 300 µm |
| | | |
| Take off speed: | | 5.5 m/min |
| | | |
| Output: | | 62 kg/h |

A number of parameters, including penetration energy, haze and tensile modulus, were determined on the sheets.

The results are shown in table 3

**Table 3**

| | | | Example No. | | | | | | |
|---|---|---|---|---|---|---|---|---|---|
| | | | CE2 | E2 | E3 | E5 | E6 | E7 | CE3 |
| Damaging Force (FSD) | [N/mm] | +23°C | 1300 | 1544 | 1311 | 1563 | 1401 | 1235 | 1013 |
| | | -20°C | 1528 | 1339 | 1425 | 1320 | 1623 | 1300 | 1158 |
| | | | | | | | | | |
| Penetration Energy (WSD) | [J/mm] | +23°C | 8,83 | 9,51 | 7,99 | 9,13 | 8,66 | 7,05 | 4,22 |
| | | -20°C | 6,4 | 4,73 | 7,4 | 5,7 | 7,4 | 5,17 | 3,5 |
| | | | | | | | | | |
| total Penetration Energy (W ges) | [J/mm] | +23°C | 13.846 | 13,88 | 12,75 | 13,68 | 12,96 | 12,66 | 10,25 |
| | | -20°C | 9,13 3 | 5,05 | 15,8 | 5,82 | 13 | 7.665 | 3,94 |
| | | | | | | | | | |
| Haze | [%] | | 74,5 | 16,51 | 19,46 | 15,39 | 20,27 | 39,03 | 78,37 |
| | | | | | | | | | |
| Gloss | [%] | | 30 | 125,5 | 117 | 124 | 120 | 85,7 | 52,8 |
| | | | | | | | | | |
| Tensile Modulus | [MPa] | MD | 1194 | 1471 | 1150,7 | 1453 | 1242 | 982 | 1406,84 |
| | | TD | 1057 | 1164 | 882,5 | 1220 | 948 | 857 | 1233 |
| | | | | | | | | | |
| yield stress | [MPa] | MD | 27 | 37 | 27,6 | 36 | 32 | 24,4 | 30,5 |
| | | TD | 20,2 | 42,3 | 18,7 | 24 | 18,6 | 18,3 | 23,6 |
| | | | | | | | | | |
| elongation at yield | [%] | MD | 15 | 37 | 29,5 | 31 | 42 | 18,5 | 11,5 |
| | | TD | 4,1 | 3,8 | 10,8 | 3,7 | 4,4 | 7,1 | 3,8 |
| | | | | | | | | | |
| shrinkage | [%] (160°C/30 min) | MD | 30 | 26,5 | 21 | 33,3 | 26,3 | 22,8 | 19,7 |
| | | TD | -3,8 | -3,2 | 1 | -4,3 | -2,7 | -1,8 | -2,3 |

| | | | | | | | | | |
|---|---|---|---|---|---|---|---|---|---|
| MD Machine direction TD Transverse direction | | | | | | | | | |

## Claims

1. Flat film for thermoforming with high toughness, high stiffness and high transparency, comprising a polyolefin composition, which polyolefin composition comprises
(A) a heterophasic propylene copolymer containing
a) 83 - 90 wt% of a matrix phase comprising a propylene homopolymer or a propylene copolymer with up to 5 mol% of ethylene and/or at least one C₄-C₈ α-olefin and
b) 10 - 17 wt% of a disperse phase comprising an ethylene rubber copolymer with from 20 - 80 mol% ethylene and from 80 - 20 mol% of at least one C₃-C₈ α-olefin and
where the intrinsic viscosity of the XCS-fraction of the heterophasic copolymer is ≤ 2 dl/g and
B) an α-nucleating agent,
the film having a thickness of from 100 to 2000 µm
and where the process for producing the flat film comprises at least one polishing step.

2. Flat film according to claim 1, **characterised in that** the film has a thickness of from 250 to 500 µm, preferably of about 300 µm.

3. Flat film according to one of claims 1 or 2, **characterised in that** the ethylene rubber copolymer is an ethylene propylene rubber (EPR).

4. Flat film according to one of claims 1 to 3, **characterised in that** the polyolefin composition has an MFR of 0.5 - 8.0 g/10 min, preferably 2.0 - 4.0 g/10 min.

5. Flat film according to one of claims 1 to 4, **characterised in that** the intrinsic viscosity of the XCS-fraction of the heterophasic copolymer is from 0.9 - 1.8 dl/g.

6. Flat film according to one of claims 1 to 5, **characterised in that** the α-nucleating agent comprises any one or mixtures of sodium benzoate, 1,3 : 2,4 bis(3,4-dimethylbenzylidene) sorbitol, sodium 2,2'-methylene bis-(4,6-di-tert. butylphenyl) phosphate and hydroxy bis-(2,4,8,10-tetra-tert butyl-6-hydroxy-12H-dibenzo(d,g)(1,3,2) dioxaphosphocin 6-oxidato) aluminium.

7. Process for producing a flat film according to one of claims 1 to 6, comprising the steps of extruding a polyolefin composition, which polyolefin composition comprises
A) a heterophasic propylene copolymer containing
a) 83 - 90 wt% of a matrix phase comprising a propylene homopolymer or a propylene copolymer with up to 5 mol% of ethylene and/or at least one C₄-C₈ α-olefin and
b) 10 - 17 wt% of a disperse phase comprising an ethylene rubber copolymer with from 20 - 80 mol% ethylene and from 80 - 20 mol% of at least one C₃-C₈ α-olefin and
where the intrinsic viscosity of the XCS-fraction of the heterophasic copolymer is s 2 dl/g and
B) an α-nucleating agent,
through a flat die and processing the extrudate on a polishing stack into a flat film having a thickness of from 100 to 2000 µm.

8. Article, **characterised in that** it is obtained by subjecting a film according to one of claims 1 to 6 to a thermoforming process.

## Patentansprüche

1. Flachfolie zum Thermoformen mit hoher Zähigkeit, hoher Steifigkeit und hoher Transparenz, umfassend eine Polyolefinzusammensetzung, die
A) ein heterophasiges Propylencopolymer, enthaltend
a) 83-90 Gew.-% einer Matrixphase, umfassend ein Propylenhomopolymer oder ein Propylencopolymer mit bis zu 5 Mol-% Ethylen und/oder mindestens einem C₄-C₈-α-Olefin, und
b) 10-17 Gew.-% einer dispersen Phase, umfassend ein Ethylenkautschukcopolymer mit 20-80 Mol-% Ethylen und 80-20 Mol-% mindestens eines c₃-c₈-α-olefins,
wobei die intrinsische Viskosität der XCS-Fraktion des heterophasigen Copolymers ≤ 2 dl/g ist, und
B) ein α-Nukleierungsmittel
umfaßt,
wobei die Folie eine Dicke von 100 bis 2000 µm aufweist
und das Verfahren zur Herstellung der Flachfolie mindestens einen Glättschritt umfaßt.

2. Flachfolie nach Anspruch 1, **dadurch gekennzeichnet, daß** die Folie eine Dicke von 250 bis 500 µm und vorzugsweise etwa 300 µm aufweist.

3. Flachfolie nach Anspruch 1 oder 2, **dadurch gekennzeichnet, daß** es sich bei dem Ethylenkautschukcopolymer um einen Ethylen-Propylen-Kautschuk (EPR) handelt.

4. Flachfolie nach einem der Ansprüche 1 bis 3, **dadurch gekennzeichnet, daß** die Polyolefinzusammensetzung eine MFR von 0,5-8,0 g/10 min und vorzugsweise 2,0-4,0 g/10 min aufweist.

5. Flachfolie nach einem der Ansprüche 1 bis 4, **dadurch gekennzeichnet, daß** die intrinsische Viskosität der XCS-Fraktion des heterophasigen Copolymers 0,9-1,8 dl/g beträgt.

6. Flachfolie nach einem der Ansprüche 1 bis 5, **dadurch gekennzeichnet, daß** das α-Nukleierungsmittel Natriumbenzoat, 1,3:2,4-Bis(3,4-dimethylbenzyliden)sorbitol, Natrium-2,2'-methylenbis(4,6-di-tert.-butylphenyl)phosphat und Hydroxybis-(2,4,8,10-tetra-tert.-butyl-6-hydroxy-12H-dibenzo-(d,g)(1,3,2)dioxaphosphocin-6-oxidato)aluminium oder Mischungen davon umfaßt.

7. Verfahren zur Herstellung einer Flachfolie gemäß einem der Ansprüche 1 bis 6, bei dem man eine Polyolefinzusammensetzung, die
A) ein heterophasiges Propylencopolymer, enthaltend
a) 83-90 Gew.-% einer Matrixphase, umfassend ein Propylenhomopolymer oder ein Propylencopolymer mit bis zu 5 Mol-% Ethylen und/oder mindestens einem C₄-C₈-α-Olefin, und
b) 10-17 Gew.-% einer dispersen Phase, umfassend ein Ethylenkautschukcopolymer mit 20-80 Mol-% Ethylen und 80-20 Mol-% mindestens eines C₃-C₈-α-Olefins, wobei die intrinsische Viskosität der XCS-Fraktion des heterophasigen Copolymers ≤ 2 dl/g ist, und
B) ein α-Nukleierungsmittel
umfaßt,
durch eine Flachdüse extrudiert und das Extrudat auf einem Glättwerk zu einer Flachfolie mit einer Dicke von 100 bis 2000 µm verarbeitet.

8. Gegenstand, **dadurch gekennzeichnet, daß** er **dadurch** erhalten wird, daß man eine Folie gemäß einem der Ansprüche 1 bis 6 einem Thermoformverfahren unterwirft.

## Revendications

1. Film plat pour thermoformage, présentant une haute ténacité, une haute rigidité et une haute transparence, comprenant une composition polyoléfinique, laquelle composition polyoléfinique comprend
(A) un copolymère de propylène hétérophasique contenant
a) de 83 à 90% en poids d'une phase matricielle comprenant un homopolymère de propylène ou un copolymère de propylène renfermant jusqu'à 5% en moles d'éthylène et/ou au moins une α-oléfine en C₄-C₈, et
b) de 10 à 17% en poids d'une phase dispersée comprenant un copolymère caoutchouc d'éthylène refermant de 20 à 80% en moles d'éthylène et de 80 à 20% en moles d'au moins une α-oléfine en C₃-C₈, et
où la viscosité intrinsèque de la fraction XCS du copolymère hétérophasique est ≤2 dl/g et
(B) un agent de α-nucléation,
le film présentant une épaisseur de 100 à 2000 µm,
et où le procédé de production du film plat comprend au moins une étape de polissage.

2. Film plat selon la revendication 1, **caractérisé en ce que** le film présente une épaisseur de 250 à 500 µm, de préférence d'environ 300 µm.

3. Film plat selon l'une quelconque des revendications 1 ou 2, **caractérisé en ce que** le copolymère caoutchouc d'éthylène est un caoutchouc d'éthylène/propylène (EPR).

4. Film plat selon l'une quelconque des revendications 1 à 3, **caractérisé en ce que** la composition polyoéfinique présente un indice de fluidité à chaud de 0,5 à 8,0 g/10 min, de préférence de 2,0 à 4,0 g/10 min.

5. Film plat selon l'une quelconque des revendications 1 à 4, **caractérisé en ce que** la viscosité intrinsèque de la fraction XCS du copolymère hétérophasique est de 0,9 à 1,8 dl/g.

6. Film plat selon l'une quelconque des revendications 1 à 5, **caractérisé en ce que** l'agent de α-nucléation comprend l'un quelconque parmi ou des mélanges de benzoate de sodium, de 1,3:2,4-bis(3,4-diméthylbenzylidène)sorbitol, de 2,2'-méthylène-bis(4,6-di-tert-butylphényl)phosphate de sodium et d'hydroxy-bis(2,4,8,10-tétra-tert-butyl-6-hydroxy-12H-dibenzo(d,g)(1,3,2)dioxaphosphocin-6-oxydato)-aluminium.

7. Procédé de production d'un film plat selon l'une quelconque des revendications 1 à 6, comprenant les étapes d'extrusion d'une composition polyoléfinique, laquelle composition polyoléfinique comprend
(A) un copolymère de propylène hétérophasique contenant
a) de 83 à 90% en poids d'une phase matricielle comprenant un homopolymère de propylène ou un copolymère de propylène renfermant jusqu'à 5% en moles d'éthylène et/ou au moins une α-oléfine en C₄-C₈, et
b) de 10 à 17% en poids d'une phase dispersée comprenant un copolymère caoutchouc d'éthylène refermant de 20 à 80% en moles d'éthylène et de 80 à 20% en moles d'au moins une α-oléfine en C₃-C₈, et
où la viscosité intrinsèque de la fraction XCS du copolymère hétérophasique est ≤ 2 dl/g et
(B) un agent de α-nucléation,
à travers une filière plate, et de transformation de l'extrudat, sur une pile de polissage, en un film plat présentant une épaisseur de 100 à 2000 µm.

8. Article, **caractérisé en ce qu'**il est obtenu en soumettant un film selon l'une quelconque des revendications 1 à 6 à un procédé de thermoformage.
